Europäisches Patentamt

European Patent Office

Office européen des brevets

(11) Veröffentlichungsnummer: **0 185 932**
**B1**

(12) **EUROPÄISCHE PATENTSCHRIFT**

(45) Veröffentlichungstag der Patentschrift:
**10.08.88**

(21) Anmeldenummer: **85114784.3**

(22) Anmeldetag: **21.11.85**

(51) Int. Cl.⁴: **H 02 G 11/02**

(54) **Leitungsroller mit Temperaturbegrenzungsschalter.**

(30) Priorität: **15.12.84 DE 8436765 U**

(43) Veröffentlichungstag der Anmeldung:
**02.07.86 Patentblatt 86/27**

(45) Bekanntmachung des Hinweises auf die Patenterteilung:
**10.08.88 Patentblatt 88/32**

(84) Benannte Vertragsstaaten:
**AT BE DE FR NL SE**

(56) Entgegenhaltungen:
**DE-A-1 590 291**
**DE-A-2 752 429**
**DE-A-3 331 847**
**DE-U-8 436 765**
**FR-A-2 455 348**

(73) Patentinhaber: **Popp & Co. GmbH, Kulmbacher Strasse 27, D-8582 Bad Berneck (DE)**

(72) Erfinder: **Bauer, Werner, Escherlich Nr. 5, D-8582 Bad Berneck (DE)**
Erfinder: **Hedler, Reinhold, Kirchenring 15, D-8582 Bad Berneck (DE)**

(74) Vertreter: **Tergau, Enno, Patentanwälte Tergau & Pohl Postfach 11 93 47 Hefnersplatz 3, D-8500 Nürnberg 11 (DE)**

EP 0 185 932 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft einen Leitungsroller mit einem eingebauten Temperaturbegrenzungsschalter, wie er im Oberbegriff des Anspruches 1 näher bezeichnet ist.

Derartige Leitungsroller sind bekannt und handelsüblich. Sie sind mit einem auf eine Kabeltrommel aufwickelbaren Verlängerungskabel ausgestattet. Dieses mündet in der Nabe der Kabeltrommel in einen Steckdoseneinsatz, womit eine oder mehrere Steckdosen mit Strom versorgt werden. Problematisch beim Betrieb eines Elektrogerätes über einen solchen Leitungsroller ist die bei aufgewickeltem Verlängerungskabel anfallende Wärme vor allem im Nabenbereich der Kabeltrommel. Um entsprechenden gesetzlichen Vorschriften zu genügen, sind handelsübliche Leitungsroller mit einem Temperaturbegrenzungsschalter ausgerüstet, der bei Überschreiten einer bestimmten Grenztemperatur für eine Stromunterbrechung sorgt. Damit der üblicherweise neben den Steckdosen im Steckdoseneinsatz angebrachte Temperaturbegrenzungsschalter auf Übertemperaturen vor allem im Bereich der innersten Wickellagen rechtzeitig reagieren kann, weisen herkömmliche Leitungsroller zwischen dem Gehäuse des Temperaturbegrenzungsschalters und der Wickelfläche der Kabeltrommel sogenannte Thermoleitbügel auf. Bei Metall-Kabeltrommeln Sind dies einfach metallische Stege, die an der Nabeninnenwand der Kabeltrommel angeschraubt sind. Bei Kunststoff-Kabeltrommeln ist die Wickelfläche Vorzugsweise in axialer Richtung von solchen Thermoleitbügeln durchsetzt. Dazu müssen in der Nabe entsprechende Führungen zum Einschieben und Haltern der Thermoleitbügel vorhanden sein. Damit sind herkömmliche Leitungsroller in ihrem Aufbau recht aufwendig, durch die Notwendigkeit, einen Thermoleitbügel zu montieren, wird zudem die Montage komplizierter.

Der Erfindung liegt die Aufgabe zugrunde, die bekannten Leitungsroller mit eingebauter Steckdose und einem Temperaturbegrenzungsschalter baulich zu vereinfachen, sie somit weniger störanfällig und leichter reparierbar zu machen.

Diese Aufgabe wird gemäß den kennzeichnenden Merkmalen des Anspruches 1 gelöst, indem der Temperaturbegrenzungsschalter im unmittelbar an der Nabeninnenwand liegenden Umfangsbereich des Steckdoseneinsatzes montiert ist.

Wesentlich dabei ist die ausschließliche Halterung und Verbindung des Schalters zum Steckdosene insatz. Beim Erfindungsgegenstand sind keinerlei Speziellen Thermoleitbügel oder ähnliche wärmeübertragenden Elemente vorgesehen. Auch braucht der Temperaturbegrenzungsschalter nicht direkt an die Nabeninnenwand angeschraubt werden, um einen genügenden Wärmeübergang zu schaffen. Dadurch ergibt sich die erwähnte bauliche Vereinfachung der erfindungsgemäßen Leitungsroller. Durch die Anordnung des Temperaturbegrezungsschalters in unmittelbarer Nähe der Nabeninnenwand ist eine genügende Thermosensibilität des Schalters gewährleistet. Damit kann weiterhin auf eine Durchbrechung der Trommelnabe zur Aufnahme von Thermoleitbügeln verzichtet werden. Die Herstellung vereinfacht sich, da einfachere Formen für die Kabeltrommeln verwendet werden können. Ein weiterer Vorteil bei erfindungsgemäß ausgebildeten Leitungsrollern ist die Möglichkeit, eine Art Baukastenprinzip anzuwenden. Durch den Wegfall der Thermoleitbügelverbindung zwischen Kabeltrommel und Temperaturbegrenzungsschalter können nämlich im Prinzip beliebige Kabeltrommeln - z. B. mit nicht durchbrochener Nabe, aus Kunststoffmaterial oder Metall - verwendet werden, solange nur der lichte Innendurchmesser der Nabe zum Außendurchmesser des Steckdoseneinsatzes paßt. Durch die Außenlage des Temperaturbegrenzungsschalters spricht dieser auf Wärmeüberschuß in der Kabeltrommel genügend schnell an. Die Wärmeübertragung findet dabei im wesentlichen durch Konvektion und Wärmestrahlung statt.

Eine besonders vorteilhafte Bauform des Erfindungsgegenstandes ergibt sich durch die kennzeichnenden Merkmale der Ansprüche 2 und 3. Durch die Anordnung des Temperaturbegrenzungsschalters in einer vom Steckdoseneinsatzgehäuse gebildeten Schalterkammer ergibt sich eine klare Gliederung des Steckdoseneinsatzes. Durch diese Trennung des Schalterraumes von den Steckdosen ist der Temperaturbegrenzungsschalter bei Reparaturarbeiten an den Bauteilen der Steckdosen vor Beschädigungen u.dgl. geschützt. Da andererseits die Schalterkammer zur Nabeninnenwand der Kabeltrommel hin offen ausgebildet ist, ist ein ungehinderter Wärmeübergang von den inneren Wickellagen des Verlängerungskabels über die Nabeninnenwand zum Temperaturbegrenzungsschalter hin gewährleistet. Damit spricht der Schalter im praktischen Einsatz sicher auf eine Übertemperatur an. Auch vereinfacht sich durch diese Außenlage die Montage des Thermoschalters.

Die Thermosensibilität des Temperaturbegrenzungsschalters wird durch die Ausgestaltung des Erfindungsgegenstandes gemäß den Ansprüchen 4 bis 6 weiter verbessert. Durch die scheibenartige Ausbildung des Temperatursensors in Form einer Bimetallsprungscheibe erhält dieser eine relativ große Wärmeaufnahmefläche, er kann also in kürzerer Zeit auf eine Übertemperatur ansprechen. Unterstützt wird dieser Effekt noch durch die Anordnung des Temperatursensors am Temperaturbegrenzungsschalter auf der der Nabeninnenwand zugewandten, offenen Seite der Schalterkammer, da dadurch der Abstand zwischen Wärmequelle und der Bimetallsprungscheibe verringert wird. Deren Erstreckungsebene liegt tangential zur Nabeninnenwand, damit kann der Wärmestrahlungs und -konvektionsstrom mit bestem Wirkungsgrad für eine Erwärmung des Temperatursensors sorgen. Die Ansprechsicherheit des Temperaturbegrenzungsschalters wird damit weiter verbessert.

Durch den Einbau des Temperaturbegrenzungsschalters in nabenachsenparalleler Längserstreckungsrichtung kann die axiale Bautiefe des Nabeninnenraumes besser ausgenützt werden. Da die Schmalseite des Temperaturbegrenzungsschalters damit eine tangential gerichtete Einbaulage aufweist, kann der Temperatursensor weiter nach außen in Richtung zur Nabeninnenwand gesetzt werden.

Durch das Kennzeichnungsmerkmal des Anspruches 8 ist es möglich, die Bimetallsprungscheibe mit ihrer Erstreckungsebene im wesentlichen tangential zur Nabeninnenwand anzuordnen und trotzdem den Betätigungsknopf für den Rücksetzstift in der Stirnseite des Steckdoseneinsatzes mit nabenachsenparalleler Betätigungsrichtung anzuordnen. Der Rücksetzstift und der Betätigungsknopf sind nämlich rechtwinklig zueinander verschiebbar gelagert. Ihre zugewandten Enden sind dabei abgeschrägt und bilden somit eine Aufgleitschrägfläche. Bei achsenparalleler Verschiebung des Betätigungsknopfes kommen die Aufgleitschrägflächen in Anlage zueinander, die Schiebebewegung wird um 90° umgelenkt und der Rücksetzstift radial verschoben. Die Bimetallsprungscheibe wird damit nach thermischer Auslösung aus ihrer Inaktiv- in die Aktivstellung übergeführt. Durch eine derartige Ausgestaltung ist es also möglich, die Vorteile einer tangential zur Nabeninnenwand liegenden Bimetallsprungscheibe zu kombinieren mit einer bequemen Zugänglichkeit des Betätigungsknopfes zur Rücksetzung des Temperaturbegrenzungsschalters, indem dieser an der Stirnseite des Steckdoseneinsatzes angebracht ist.

Durch das Kennzeichnungsmerkmal des Anspruches 9 wird eine flache, langgestreckte Bauform für den Temperaturbegrenzungsschalter erzielt.

Durch die Anordnung von Betätigungsknopf und Anschlußkontakten an den gegenüberliegenden flachen Schmalseiten des Temperaturbegrenzungsschalters ist dieser sowohl von einer Seite leicht zu betätigen, als auch bei der Montage einfach anzuschließen. Mit dem Durchgriff des Betätigungsknopfes und der Anschlußkontakte durch die axial gegenüberliegenden Schmalseiten des Schalterbettes gemäß dem Kennzeichnungsmerkmal des Anspruches 11 wird eine sichere Halterung des Schalters am Steckdoseneinsatzgehäuse erzielt. Der formschlüssige Durchgriff nach Anspruch 12 erleichtert insbesondere die Herstellung einer wassergeschützten Ausführungsform des Erfindungsgegenstandes, was durch die klare Gliederung des Steckdoseneinsatzes durch die Schalterkammer weiter unterstützt wird.

Ganz allgemein ist bei Leitungsrollern der herkömmlichen Bauart eine wasserdichte Ausführung durch die Vielzahl von Ausnehmungen und Durchgriffen für die Thermoleitbügel schwer zu realisieren. Demgegenüber kann beim Erfindungsgegenstand die Trommelnabe durchbrechungsfrei - außer einer einzigen Bohrung für die Durchführung des Kabels in den Steckdoseneinsatz - gefertigt werden. Da auch der Steckdoseneinsatz - abgesehen von den eigentlichen Steckdosen - in seinem Umfangsbereich nur das Schalterbett aufweisen muß, ist eine Abdichtung des Nabeninnenraumes und des Steckdoseneinsatzes gegen eindringendes Wasser verhältnismäßig einfach zu realisieren.

Die Erfindung wird an Hand der beiliegenden Figuren in einem Ausführungsbeispiel näher erläutert. Es zeigen:

Fig. 1    eine Vorderansicht eines Leitungsrollers mit Vierfachsteckdose,

Fig. 2    eine Seitenansicht des Leitungsrollers gemäß Fig. 1 in teilweise aufgebrochener Darstellung,

Fig. 3    eine Draufsicht auf den Temperaturbegrenzungsschalter in Einbaulage am Steckdoseneinsatz (Trommelnabe durchbrochen),

Fig. 4    einen Teilquerschnitt eines Leitungsrollers mit eingesetztem Temperaturbegrenzungsschalter.

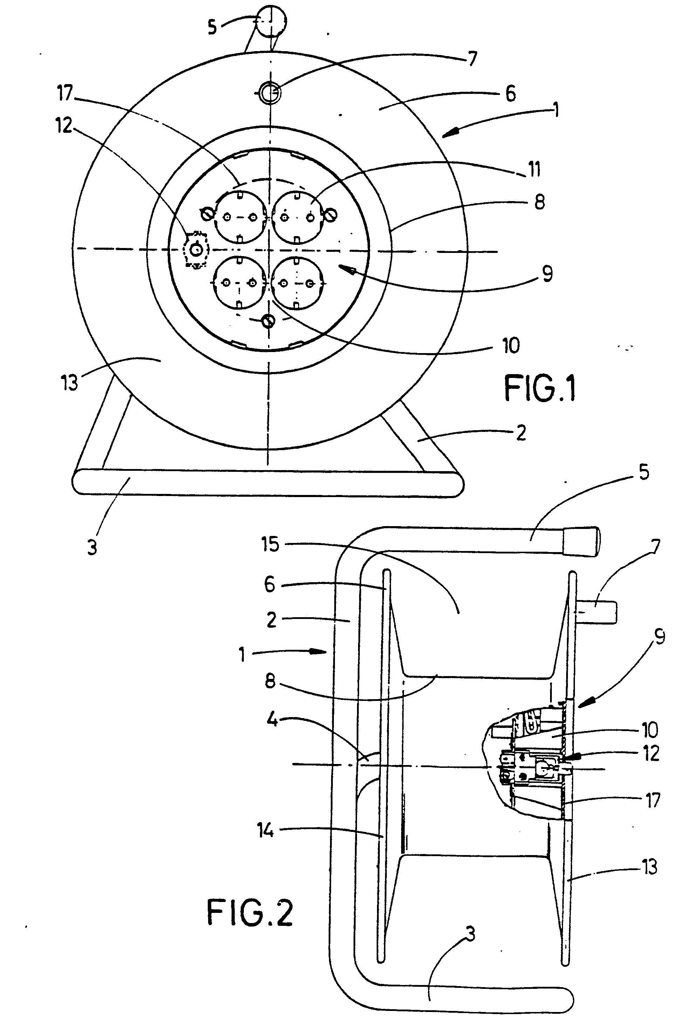

In den Figuren 1 und 2 der Zeichnung ist zunächst ein Leitungsroller 1 als Ganzes dargestellt. Ein derartiger Leitungsroller 1 besteht aus einem Gestell 2, das beispielsweise aus Stahlrohr oder Leichtmetallrohr geformt sein kann und in aller Regel eine Bodenauflage 3, einen Trommelträger 4 und einen Handgriff 5 aufweist. Am Trommelträger 4 ist eine Kabeltrommel 6 drehbar gelagert, auf die ein Elektrokabel (nicht dargestellt) aufgewickelt ist. Um die Kabeltrommel 6 bequemer drehen und dadurch das Kabel aufwickeln zu können, weist diese einen Drehgriff 7 auf.

Die Kabeltrommel 6 bildet mit ihrer Nabe 8 den becherförmigen, einseitig offenen Nabeninnenraum 9. In diesen ist der vorzugsweise aus Kunststoff gefertigte, im wesentlichen zylinderförmige Steckdoseneinsatz 10 montiert. Im dargestellten Ausführungsbeispiel weist der Steckdoseneinsatz 10 vier Steckdosen 11 auf, an deren Stelle jedoch auch nur eine, zwei oder drei Dosen vorhanden sein können. Das Elektrokabel ist durch eine Öffnung der Nabe 8 in den Steckdoseneinsatz 10 geführt und dort mit den Anschlußkontakten der Steckdosen 11 elektrisch leitend verbunden. Während des Einsatzes der Kabeltrommel wird die benötigte Länge des Elektrokabels vom Leitungsroller 1 abgewickelt. Wird das Kabel von einem Strom höherer Stärke durchflossen, so wird es entsprechend der Stromstärke mehr oder weniger stark erwärmt. Unter ungünstigen Umständen, beispielsweise bei vielen vorhandenen Wickellagen des Elektrokabels oder bei überhöhter Stromstärke, würde vor allem im Nabenbereich der Kabeltrommel sehr bald eine hohe Temperatur auftreten, was zu Beschädigungen oder Störungen des Steckdoseneinsatzes, des Kabels oder des gesamten Leitungsrollers führen könnte. In diesem Fall existiert auch eine akute Brandgefahr. Um hier Abhilfe zu schaffen, ist in den Steckdoseneinsatz 10 des Leitungsrollers 1 ein Temperaturbegrenzungsschalter 12 eingebaut. Dieser Temperaturbegrenzungsschalter 12 steht mit dem durch die Nabe 8 und die beiden Seitenflansche 13, 14 gebildeten Wickelraum 15 in thermischem Kontakt. Dieser thermische Kontakt beruht im wesentlichen nur auf Wärmestrahlung und Konvektion. Im Gegensatz dazu erfolgt die Wärmeübertragung bei herkömmlichen Leitungsrollern durch Wärmeleitung über Thermoleitbügel, die die Nabe 8 der Kabeltrommel 6 durchsetzen. Der Temperaturbegrenzungsschalter 12 ist dabei im unmittelbar an der Nabeninnenwand 16 liegenden Umfangsbereich des zylinderförmigen Steckdoseneinsatzes 10 montiert. Es besteht dabei keine direkte Halterung oder Verbindung des Schalters zur Kabeltrommel 6.

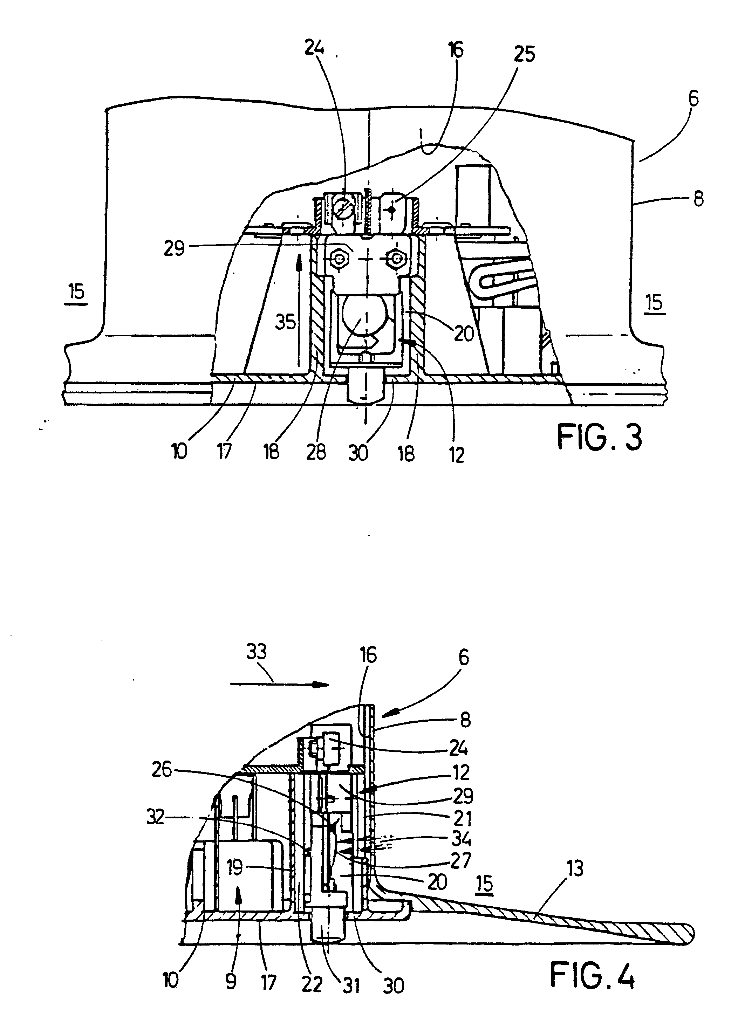

In den Figuren 3 und 4 ist der Temperaturbegrenzungsschalter 12 in seiner Einbaustellung dargestellt. Er liegt in einer von der Stirnseite 17 und axialen bzw. radialen Zwischenwänden 18, 19 gebildeten Schalterkammer 20. Die offene Außenseite 21 dieser Schalterkammer flankiert tangential die Nabeninnenwand 16 der Kabeltrommel 6. Durch die offene Gestaltung der Schalterkammer 20 liegt der Temperaturbegrenzungsschalter 12 quasi im Schalterbett 22 ein.

Im folgenden soll der Aufbau und die Funktion des Temperaturbegrenzungsschalters 12 kurz erläutert werden. Über zwei parallel nebeneinanderliegende, die innere Schmalseite, 23 des Schalterbettes 22 durchgreifende Anschlußfahnen 24, 25 ist ein Festkontakt 26 bzw. ein beweglicher Federkontaktarm 27 elektrisch anschließbar. Als Temperatursensor weist der Schalter eine Bimetallsprungscheibe 28 auf, die von der Offenseite des Schalterbettes 22 her gesehen auf dem Federkontaktarm 27 befestigt ist. Durch die etwa ebenenparallele Anordnung dieser Bauteile ergibt sich eine langgestreckte, flache Bauform. Die Längserstreckungsrichtung 35 des Temperaturbegrenzungsschalters 12 verläuft nabenachsenparallel. In radialer Richtung weist dieser seine geringsten Ausmaße auf. Bei Überschreiten einer bestimmten Grenztemperatur schnappt die Bimetallsprungscheibe 28 von ihrer konvexen Aktivstellung (Fig.4) in die konkave, stabile Inaktivstellung über und hebt dabei den Federkontaktarm 27 vom Festkontakt 26 ab. Dadurch wird der Stromfluß durch den Leitungsroller 1 unterbrochen. Durch Betätigung des nabenachsenparallel am Lagerblock 29 verschiebbar gelagerten, die äußere Schmalseite 30 des Schalterbettes 22 durchsetzenden Betätigungsknopfes 31 beaufschlagt dieser mit seinem innenliegenden Ende die Aufgleitschrägfläche 32 eines Rücksetzstiftes (nicht sichtbar). Dieser ist in Radialrichtung 33 verschiebbar gelagert und kann dadurch seinerseits das Zentrum der Bimetallsprungscheibe 28 beufschlagen. Diese schnappt dadurch in die Aktivstellung zurück, womit der Stromkreis wieder geschlossen ist.

Die Bimetallsprungscheibe 28 muß die Temperatur im Wickelraum 15 möglichst verzögerungsfrei erfassen können. Deshalb ist der Temperaturbegrenzungsschalter 12 so angeordnet, daß die Bimetallsprungscheibe 28 nahe und angenähert flächenparallel zur Nabeninnenwand 16 der Kabeltrommel 6 steht. Damit kann die von der Nabeninnenwand 16 ausgehende Wärmestrahlung 34 und -konvektion gut auf die Bimetallsprungscheibe 28 wirken.

### Bezugszeichenliste

1 Leitungsroller
2 Gestell
3 Bodenauflage
4 Trommelträger
5 Handgriff
6 Kabeltrommel
7 Drehgriff
8 Nabe
9 Nabeninnenraum
10 Steckdoseneinsatz
11 Steckdose
12 Temperaturbegrenzungsschalter
13 Seitenflansch
14 Seitenflansch
15 Wickelraum
16 Nabeninnenwand
17 Stirnseite
18 Zwischenwand
19 Zwischenwand
20 Schalterkammer
21 Außenseite
22 Schalterbett
23 innere Schmalseite
24 Anschlußfahne
25 Anschlußfahne
26 Festkontakt

27 Federkontaktarm
28 Bimetallsprungscheibe
29 Lagerblock
30 äußere Schmalseite
31 Betätigungsknopf
32 Aufgleitschrägfläche
33 Radialrichtung
34 Wärmestrahlung
35 Längserstreckungsrichtung

**Patentansprüche**

1. Leitungsroller (1) zur Aufnahme eines Verlängerungskabels mit
- einer Kabeltrommel (6),
- in deren Nabe (8) ein mit mindestens einer Steckdose (11) versehener Steckdoseneinsatz (10) montiert ist,
- einem von Hand rückstellbaren Temperaturbegrenzungsschalter (12), der
- innerhalb der Nabe (8) der Kabeltrommel (6) am Steckdoseneinsatz (10) gelagert ist, und mit dem Wickelraum (15) des Verlängerungskabels in thermischem Kontakt steht,
dadurch gekennzeichnet,
daß der Temperaturbegrenzungschalter (12) im unmittelbar an der Nabeninnenwand (16) liegenden Umfangsbereich des im wesentlichen zylinderförmigen Steckdoseneinsatzes (10) mit ausschließlicher Halterung und Verbindung zum Steckdoseneinsatz (10) montiert ist.

2. Leitungsroller nach Anspruch 1,
dadurch gekennzeichnet,
daß der Temperaturbegrenzungsschalter (12) in einer vom Steckdoseneinsatzgehäuse (10) gebildeten, in dessen unmittelbaren stirnseitigen Umfangsbereich angeordneten Schalterkammer (20) einliegt.

3. Leitungsroller nach Anspruch 2,
dadurch gekennzeichnet,
daß die Schalterkammer (20) als zur Nabeninnenwand (16) der Kabeltrommel (6) hin offenes Schalterbett (22) ausgebildet ist.

4. Leitungsroller nach Anspruch 3,
dadurch gekennzeichnet,
daß der Temperaturbegrenzungsschalter (12) als Temperatursensor eine Bimetallsprungscheibe (28) enthält.

5. Leitungsroller nach Anspruch 4,
dadurch gekennzeichnet,
daß die Bimetallsprungscheibe (28) am Temperaturbegrenzungsschalter (12) auf der der Nabeninnenwand (16) zugewandten, offenen Seite der Schalterkammer (20) angeordnet ist.

6. Leitungsroller nach Anspruch 4 oder 5,
dadurch gekennzeichnet,
daß die Erstreckungsebene der Bimetallsprungscheibe (28) im wesentlichen tangential zur Nabeninnenwand (16) liegt.

7. Leitungsroller nach einem der vorgenannten Ansprüche,
dadurch gekennzeichnet,
daß der Temperaturbegrenzungsschalter (12) in Nabenachsenparalleler Längserstreckungsrichtung (35) eingebaut ist.

8. Leitungsroller nach einem der Ansprüche 4 bis 7,
dadurch gekennzeichnet,
daß die Bimetallsprungscheibe (28) mittels eines Rücksetzstiftes in radialer Richtung beaufschlagbar ist, wobei der Rücksetzstift über eine Aufgleitschrägfläche (32) von einem Betätigungsknopf (31) verschiebbar ist, dessen Betätigungsrichtung nabenachsenparallel liegt.

9. Leitungsroller nach einem der Ansprüche 4 - 8,
dadurch gekennzeichnet,
daß bei dem Temperaturbegrenzungsschalter (12) Betätigungsknopf (31), Bimetallsprungscheibe (28), Schalt- und Anschlußkontakt (24, 25, 26, 27) im wesentlichen in einer Ebenenrichtung liegen.

10. Leitungsroller nach Anspruch 9,
dadurch gekennzeichnet,
daß der Betätigungsknopf (31) und die Anschlußfahnen (24, 25) an den gegenüberliegenden flachen Schmalseiten (30, 23) des Temperaturbegrenzungsschalters (12) angeorndet sind.

11. Leitungsroller nach Anspruch 10,
dadurch gekennzeichnet,
daß der Betätigungsknopf (31) und die Anschlußfahnen (24, 25) die axial gegenüberliegenden Schmalseiten (30, 23) des Schalterbettes (22) durchgreifen.

12. Leitungsroller nach Anspruch 11,
dadurch gekennzeichnet,
daß der Betätigungsknopf (31) und die Anschlußfahnen (24, 25) die axial gegenüberliegenden Schmalseiten (30, 23) des Schalterbettes (22) formschlüssig durchgreifen.

**Claims**

1. A cable winder (1) for accommodating an extension cable with
- a cable reel (6),
- in the hub (8) whereof there is mounted a socket insert (10) provided with at least one socket (11),
- a manually resettable temperature limiter switch (12) which
- is mounted inside the hub (8) of the cable reel (6) on the socket insert (10), and
- which is in thermal contact with the winding space (15) for the extension cable,
characterised in that
the temperature limiter switch (12) is mounted in the peripheral zone lying directly on the inner hub wall (16), of the essentially cylindrical socket insert (10) with an exclusive mounting and connection to the socket insert (10).

2. A cable winder (1) according to claim 1,
characterised in that
the temperature limiter switch (12) is accommodated in a switch compartment (20)

formed by the socket insert box (10) arranged in its immediate peripheral zone on its front side.

3. A cable winder (1) according to claim 2, characterised in that
the switch compartment (20) is designed as a switch bed (22) which is open towards the inner hub wall (16) of the cable reel (6).

4. A cable winder (1) according to claim 3, characterised in that
the temperature limiter switch (12) contains a bimetallic snap disc (28) designed as a temperature sensor.

5. A cable winder (1) according to claim 4, characterised in that
the bimetallic snap disc (28) is arranged at the temperaure limiter switch (12) on the open side of the switch compartment (20) facing the inner hub wall (16).

6. A cable winder (1) according to claim 4 or 5, characterised in that
the plane wherein the bimetallic snap disc (28) extends, lies essentially tangentially to the inner hub wall (16).

7. A cable winder (1) according to one of the preceding claims,
characterised in that
the temperature limiter switch (12) is built in, in a longitudinal direction (35) parallel to the hub axis.

8. A cable winder (1) according to one of claims 4 to 7,
characterised in that
the bimetellic snap disc (28) can be acted on in the radial direction by means of a resetting pin, the resetting pin being displaceable via an inclined slide surface (32) by an actuating button (31) whose direction of actuation lies parallel to the hub axis.

9. A cable winder (1) according to one of claims 4 to 8,
characterised in that
in the temperature limiter switch (12), the actuating button (31), the bimetallic snap disc (28), the switching and connecting contacts (24, 25, 26, 27) lie essentially in one planar direction.

10. A cable winder (1) according to claim 9, characterised in that
the actuating button (31) and the connecting tags (24, 25) are arranged on the opposed flat narrow sides (30, 23) of the temperature limiter switch (12).

11. A cable winder (1) according to claim 10, characterised in that
the actuating button (31) and the connecting tags (24, 25) pass through the axially opposed narrow sides (30, 23) of the switch bed (22).

12. A cable winder (1) according to claim 11, characterised in that
the actuating button (31) and the connecting tags (24, 25) pass through the axially opposed narrow sides (30, 23) of the switch bed (22) in a form-closed manner.

**Revendications**

1. Enrouleur de câble électrique (1) pour recevoir un câble prolongateur comportant
- un tambour de câble (6),
- dans le moyeu (8) duquel est monté un porte-prises de courant (10) muni d'au moins une prise de courant (11),
- un disjoncteur de limitation de température (12) que l'on peut réarmer à la main et qui
- est posé à l'intérieur du moyeu (8) du tambour de câble (6), sur le porte-prises de courant (10) et
- qui est en contact thermique avec l'espace d'enroulement (15) du câble prolongateur,
caractérisé en ce que le disjoncteur de limitation de température (12) est monté dans la zone périphérique du porte-prises de courant (10), sensiblement de forme cylindrique, située immédiatement contre la paroi intérieure du moyeu (16) en étant exclusivement fixé et relié au porte-prises de courant (10).

2. Ensemble de câble électrique selon la revendication 1, caractérisé en ce que le disjoncteur de limitation de température (12) est logé dans une chambre pour disjoncteur (20) formée par le carter du porte-prises de courant (12) et disposée dans la zone périphérique frontale immédiate de ce carter.

3. Enrouleur de câble électrique selon la revendication 2, caractérisé en ce que la chambre pour disjoncteur (20) est conçue sous forme de berceau pour disjoncteur (22) ouvert en direction de la paroi intérieure du moyeu (16) du tambour de câble (6).

4. Enrouleur de câble électrique selon la revendication 3, caractérisé en ce que le disjoncteur de limitation de température (12) contient, comme détecteur de température, une rondelle élastique bimétallique (28).

5. Enrouleur de câble selon la revendication 4, caractérisé en ce que la rondelle élastique bimétallique (28) est disposée sur le disjoncteur de limitation de température (12), du côté ouvert, tourné vers la paroi intérieure du moyeu (16), de la chambre pour disjoncteur (20).

6. Enrouleur de câble électrique selon la revendication 4 ou 5, caractérisé en ce que le plan dans lequel s'étend la rondelle élastique bimétallique (28) est sensiblement tangent à la paroi intérieure du moyeu (16).

7. Enrouleur de câble électrique selon l'une des revendications précédentes, caractérisé en ce que l'interrupteur de limitation de température (12) est monté avec la direction dans laquelle il s'étend longitudinalement parallèle à l'axe du moyeu.

8. Enrouleur de câble électrique selon l'une des revendications 4 à 7, caractérisé en ce que l'on peut agir en direction radiale sur la rondelle élastique bimétallique (28) au moyen d'une tige de réarmement, étant précisé que c'est un bouton de manoeuvre (31), dont la direction de manoeuvre est parallèle à l'axe du moyeu, qui peut faire coulisser la tige de réarmement le long d'une surface oblique de glissement (32).

9. Enrouleur de câble électrique selon l'une des revendications 4 - 8, caractérisé en ce que, dans le disjoncteur de limitation de température (12), le bouton de manoeuvre (31), la rondelle élastique bimétallique (28), les contacts de mise en/hors circuit et les cosses de raccordement (24, 25, 26, 27) se trouvent sensiblement dans un même plan.

10. Enrouleur de câble électrique selon la revendication 9, caractérisé en ce que le bouton de manoeuvre (31) et les cosses de raccordement (24, 25) sont disposés sur les petits côtés plats, situés l'un en face de l'autre, (30, 23), du disjoncteur de limitation de température (12).

11. Enrouleur de câble électrique selon la revendication 10, caractérisé en ce que le bouton de manoeuvre (31) et les cosses de raccordement (24, 25) traversent les petits côtés (30, 23), situés axialement l'un en face de l'autre, du berceau pour disjoncteur (22).

12. Enrouleur de câble électrique selon la revendication 11, caractérisé en ce que le bouton de manoeuvre (31) et les cosses de raccordement (24, 25) traversent de par la forme les petits côtés (30, 23), situés axialement l'un en face de l'autre, du berceau pour disjoncteur (22).

0 185 932

FIG.1

FIG.2

FIG. 3

FIG. 4